(19) Europäisches Patentamt
European Patent Office
Office européen des brevets

(11) **EP 1 955 224 B1**

(12) **EUROPEAN PATENT SPECIFICATION**

(45) Date of publication and mention
of the grant of the patent:
**09.01.2019 Bulletin 2019/02**

(51) Int Cl.:
***G06F 17/50*** *(2006.01)*

(21) Application number: **06836927.1**

(22) Date of filing: **03.11.2006**

(86) International application number:
**PCT/US2006/043074**

(87) International publication number:
**WO 2007/056203 (18.05.2007 Gazette 2007/20)**

(54) **SYSTEM AND COMPUTER PROGRAM PRODUCT FOR ANALYZING AND MANUFACTURING A STRUCTURAL MEMBER HAVING A PREDETERMINED LOAD CAPACITY**

SYSTEM UND COMPUTERPROGRAMMPRODUKT ZUM ANALYSIEREN UND HERSTELLEN EINES STRUKTURGLIEDS MIT VORBESTIMMTER LASTKAPAZITÄT

SYSTÈME ET PRODUIT LOGICIEL INFORMATIQUE D'ANALYSE ET DE FABRICATION D'UN ÉLÉMENT STRUCTUREL D'UNE CAPACITÉ DE CHARGE PRÉDÉTERMINÉE

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.11.2005 US 733102 P**
**02.11.2006 US 555873**

(43) Date of publication of application:
**13.08.2008 Bulletin 2008/33**

(73) Proprietor: **The Boeing Company**
**Chicago, IL 60606-1596 (US)**

(72) Inventors:
• **GOSSE, Jonathan, H.**
**Issaquah, WA 98027 (US)**
• **WOLLSCHLAGER, Jeffrey, A.**
**Troy, MI 48083-2031 (US)**

(74) Representative: **Boult Wade Tennant LLP**
**Verulam Gardens**
**70 Gray's Inn Road**
**London WC1X 8BT (GB)**

(56) References cited:
• TAY ET AL: "Element Failure: An Alternative to Material Property Degradation Method for Progressive Damage in Composite Structures" JOURNAL OF COMPOSITE MATERIALS 2005, [Online] 14 June 2005 (2005-06-14), pages 1659-1675, XP002423105 Retrieved from the Internet: URL:http://jcm.sagepub.com/cgi/reprint/39/18/1659.pdf> [retrieved on 2007-03-01]
• TAY T E ET AL: "Damage progression by the element-failure method (EFM) and strain invariant failure theory (SIFT)" COMPOSITES SCIENCE AND TECHNOLOGY, ELSEVIER, vol. 65, no. 6, May 2005 (2005-05), pages 935-944, XP004749121 ISSN: 0266-3538 cited in the application
• BARLOW J: "Optimal stress locations in finite element models" INTERNATIONAL JOURNAL FOR NUMERICAL METHODS IN ENGINEERING UK, vol. 10, no. 2, 1976, pages 243-251, XP002423106 ISSN: 0029-5981
• BARLOW JOHN: "More on optimal stress points - reduced integration, element distortions and error estimation" INT J NUMER METHODS ENG JUL 1989, vol. 28, no. 7, July 1989 (1989-07), pages 1487-1504, XP002423107

EP 1 955 224 B1

- LI C F ET AL: "Low-velocity impact-induced damage of continuous fiber-reinforced composite laminates. Part I. An FEM numerical model" COMPOSITES PART A: APPLIED SCIENCE AND MANUFACTURING, ELSEVIER SCIENCE PUBLISHERS B.V., AMSTERDAM, NL, vol. 33, no. 8, 1 August 2002 (2002-08-01), pages 1055-1062, XP004379756 ISSN: 1359-835X

- CALISKAN A G: "Axial & lateral impact prediction of composite structures using explicit finite element analysis" PROCEEDINGS OF THE INTERNATIONAL MECHANICAL ENGINEERING CONGRESS AND EXPOSITION - IMECE - ASME, XX, XX, 2002, pages 41-49, XP008060399

**Description**

**BACKGROUND OF THE INVENTION**

The present invention relates generally to systems and computer program products for analyzing and/or manufacturing a structural member with a predetermined load capacity, such as by determining the critical load of a composite member, e.g., according to a partitioning of strain energy and the criticality of gauss point strains for one or more predetermined loads.

Composite structural members typically exhibit material properties that make failure analysis by conventional techniques difficult. For example, many composite materials exhibit little deformation before cracking or otherwise failing. Thus, it can be difficult to accurately predict the point of failure of a composite member based on the deformation that results from a stress before the member develops cracks or otherwise begins to fail. In particular, the anisotropic nature of fiber reinforced composite materials, as well as complexities associated with the use of multiple materials in the same structural component, generally requires predictions based on empirical techniques. Those approaches require extensive testing of identical, or substantially similar, structural components in order to develop accurate predictions. Therefore, composite members are typically tested after their design and manufacture to determine or substantiate a critical load capacity. Such testing can be expensive and time consuming, thereby limiting the number of alternative designs for a particular member that can be evaluated.

Thus, there exists a need for an improved system and computer program product for analyzing and manufacturing a structural member to determine the loading capacity of the member without requiring excessive destructive testing. The system and computer program product should be capable of analyzing composite structural members and should provide accurate evaluation of the member so that the member can be designed to withstand at least a minimum load while reducing or minimizing the weight and cost of manufacture.

Tay et al; "Element Failure: An Alternative to Material Property Degradation Method for Progressive Damage in Composite Structures" Journal of Composite Materials 2005, 14 June 2005 (2005-06-14), pages 1659-1675, describes a method for modelling progressive damage in fiber reinforced composites. Tay T E et al; "Damage progression by the element-failure method (EFM) and strain invariant failure theory (SIFT)", COMPOSITES SCIENCE AND TECHNOLOGY, ELSEVIER, vol. 65, no. 6, May 2005 (2005-05), pages 935-944, BARLOW J; "Optimal stress locations in finite element models", INTERNATIONAL JOURNAL FOR NUMERICAL METHODS IN ENGINEERING UK, vol. 10, no. 2, 1976, pages 243-251, and BARLOW JOHN; "More on optimal stress points - reduced integration, element distortions and error estimation", INT J NUMBER METHODS ENG JUL 1989, vol. 28, no. 7, July 1989 (1989-07), pages 1487-1504, disclose similar methods.

**SUMMARY OF THE INVENTION**

The invention is defined by claim 1.

A system and computer program product analyzes a load capacity of a composite member. For example, the system can be implemented with a computer program product that includes a computer-readable storage medium with computer-readable program code portions stored therein. According to one embodiment, the computer-readable program code portions include a first executable portion for receiving model data and material data. The model data is characteristic of a configuration and load condition of the structural member, and the material data is characteristic of material properties of a material of the structural member. A second executable portion analyzes the model data and generates analysis data including strain tensors for a plurality of nodes of the structural member. A third executable portion generates enhanced analysis data including a critical strain invariant value representative of a material of the structural member. A fourth executable portion analyzes the enhanced analysis data to generate results data representative of load conditions that result in damage instability in the structural member and a likely location, and direction of the instability.

For example, for a composite structural member having a matrix phase and a fiber phase, the second, third, and fourth executable portions can be configured to provide at least one matrix phase critical distortional strain invariant for the composite material of the composite member, provide at least one fiber phase critical distortional strain invariant for the composite material of the composite member, and determine at least one matrix phase critical dilatational strain invariant for the composite material of the composite member. Each matrix phase strain invariant value corresponds to a strain condition of one of a plurality of gauss points of the matrix phase of the composite member due to a predetermined load on the composite member. The executable portions can also determine a plurality of strain invariant values for the composite material of the composite member, each strain invariant value corresponding to a strain condition of one of a plurality of gauss points of the composite material of the composite member due to the predetermined load on the composite member. The executable portions can compare each matrix and fiber phase strain invariant value to the corresponding matrix or fiber phase critical strain invariant to identify a criticality of each gauss point for the predetermined load. Thus, the portions of the computer-readable program can determine a partition of a total strain energy for the predetermined load, with the total strain energy being partitioned between retained energy and dispersed energy according to the criticality of the gauss points. For example, strain energy associated with each critical gauss point can be partitioned as dispersed energy and strain energy associated with each non-critical gauss point can be partitioned as retained energy.

Further, the portions can be configured to repeat these operations for different predetermined loads, such as increasingly greater loads, and thereby calculate a critical load (onset of damage instability) that corresponds to a damage considered unacceptable for a particular application, i.e., a maximum energy that can be retained. For example, the critical load can be calculated by determining a maximum energy retention according to implicit damage functionals that are based on the lamina properties of the composite member.

An additional executable portion can also be provided for performing a probabilistic analysis of the results data to determine variations in the results data due to probabilistically likely variations in one or more of the materials of the structural member and/or the geometric configuration of the structural member. An additional executable portion can also be provided for adjusting an attribute, such as a dimension of the composite member, according to the calculated load capacity, such that an iterative analysis of the member can be performed automatically.

## BRIEF DESCRIPTION OF THE DRAWINGS

The foregoing and other advantages and features of the invention, and the manner in which the same are accomplished, will become more readily apparent upon consideration of the following detail description of the invention taken in conjunction with the accompanying drawings, which illustrate preferred and exemplary embodiments and which are not necessarily drawn to scale, wherein:

FIG. 1 is a perspective view illustrating a composite structural member formed according to one embodiment of the present invention;

FIG. 2 is a block diagram illustrating a system for analyzing the load capacity of a structural member according to one embodiment of the present invention;

FIG. 3 is a flow chart illustrating the operations for analyzing the load capacity of a structural member according to one embodiment of the present invention; and

FIGS. 4 and 5 are schematic diagrams graphically illustrating a system and operations for analyzing the load capacity of a composite structural member.

## DETAILED DESCRIPTION OF THE INVENTION

The present invention now will be described more fully hereinafter with reference to the accompanying drawings, in which some, but not all embodiments of the invention are shown. This invention may be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

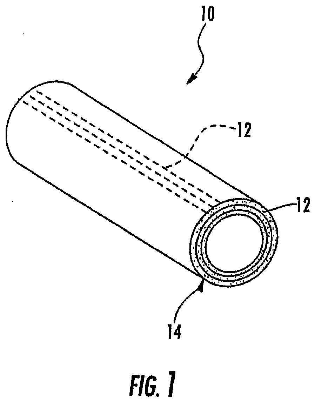

Referring now to the drawings, and in particular to FIG. 1, there is shown a structural member 10 formed of a composite material according to one embodiment of the present invention. In particular, the composite material of the member 10 includes a fiber phase and a matrix phase. The fiber phase is defined by a plurality of fiber reinforcement members 12 (three of which are illustrated by broken lines extending longitudinally along the member **10** in FIG. 1), and the matrix phase is defined by a matrix material **14** in which the fiber reinforcement members **12** are disposed. For example, the structural member **10** can be formed of a plurality of elongate tapes (or "tows") that are disposed, consolidated, and cured in the desired configuration. The reinforcement members **12** can be disposed as individual fibers, strands, braids, woven or nonwoven mats, and the like that are formed of materials such as fiberglass, metal, minerals, conductive or nonconductive graphite or carbon, nylon, aramids such as Kevlar®, a registered trademark of E. I. du Pont de Nemours and Company, and the like. The matrix phase **14,** in which the reinforcement members are disposed **12,** can include various materials such as thermoplastic or thermoset polymeric resins. Exemplary thermosetting resins include allyls, alkyd polyesters, bismaleimides (BMI), epoxies, phenolic resins, polyesters, polyurethanes (PUR), polyurea-formaldehyde, cyanate ester, and vinyl ester resin. Exemplary thermoplastic resins include liquid-crystal polymers (LCP); fluoroplastics, including polytetrafluoroethylene (PTFE), fluorinated ethylene propylene (FEP), perfluoroalkoxy resin (PFA), polychlorotrifluoroethylene (PCTFE), and polytetrafluoroethylene-perfluoromethylvinylether (MFA); ketone-based resins, including polyetheretherketone (PEEK™, a trademark of Victrex PLC Corporation, Thorntons Cleveleys Lancashire, UK); polyamides such as nylon-6/6, 30% glass fiber; polyethersulfones (PES); polyamideimides (PAI), polyethylenes (PE); polyester thermoplastics, including polybutylene terephthalate (PBT), polyethylene terephthalate (PET), and poly(phenylene terephthalates); polysulfones (PSU); poly(phenylene sulfides) (PPS).

The structural member **10** is characterized by critical load capacity, i.e., critical loads below which each portion of the member **10** can be subjected without damage instability or failure. The critical loads are dependent on such factors as the materials of which the member is formed. For example, in the case of a composite structural member as illustrated in FIG. **1,** the critical loads are determined by the types of fiber and matrix materials, the relative amounts of the fiber and matrix phases, the configuration of the fiber phase in the matrix phase, the dimensions and configuration of the composite member, the type of loading applied, other conditions to which the member is exposed, and the like. A composite structural member can be designed and manufactured to achieve a predetermined critical load capacity according to the actual loading of the composite member that is anticipated during operation or use thereof. In this regard, the critical load capacity can be determined analytically, without destruction of the member, according to the present invention. For example, the critical load capacity of the member can be determined before the manufacture of the composite member, such that subsequent destructive testing of the member is reduced or eliminated.

The critical loading capacity can be determined according to the capacity of the member to retain energy, and through the use of a strain invariant failure theory (referred to herein as "SIFT"). SIFT is further described in "A Damage Functional Methodology for Assessing Post-Damage Initiation Environments in Composite Structure," by Jonathan H. Gosse, AIAA-2004-1788, 45th AIAA/ASME/ASC Structures, Structural Dynamics & Materials Conference, April 19-22, 2004, Palm Springs, California. As described therein, SIFT can be used to analyze the initiation of damage in composite materials and bonded assemblies, and can be applied to various configurations of laminate stacking sequences, structural geometries, loading and boundary conditions, and the like. In particular, SIFT can be used to analyze damage initiation that is induced or indicated by a change in a shape of the structural member ("distortion") and/or a change in a volume of the structural member ("dilatational"). In this regard, SIFT considers the distortion and dilation of the matrix and fiber of the structural member.

Damage initiation in the structural member is typically dictated by critical strain invariants associated with each of the fiber and matrix phases, i.e., critical strain values that are characteristic of the material(s) of the structural member. For example, a composite structural member can be formed by laying, consolidating, and curing a plurality of elongate composite tapes, each tape having fibers disposed in a matrix material with the fibers extending generally longitudinally along the direction of the tape. Damage initiation within the matrix phase of such a composite structural member is typically dictated by two critical strain invariants, $J_1^{critical}$ and $\varepsilon_{von\ Mises}^{critical}$, that are characteristic of the matrix material, while damage in the fiber phase is typically dictated by one critical strain invariant, $\varepsilon_{von\ Mises}^{fibre\ critical}$, which is characteristic of the fiber reinforcement material. The $\varepsilon_{von\ Mises}^{fibre\ critical}$ is actually a highly localized value of the $\varepsilon_{von\ Mises}^{critical}$ of the matrix phase. The value of this critical invariant is inferred by analyzing the fiber-dominated failure of product form and therefore is expressed as $\varepsilon_{von\ Mises}^{fiber\ critical}$. Thus, the criticality of a strain (i.e., whether the strain will result in permanent damage to the structural member) can be determined by comparing the strain invariants $J_1$, $\varepsilon_{von\ Mises}$ of the matrix phase to the respective critical strain invariants $J_1^{cntical}$ and $\varepsilon_{von\ Mises}^{critical}$ for the matrix phase and comparing the strain invariant $\varepsilon_{von\ Mises}^{fiber}$ of the fiber phase to the respective critical strain invariant $\varepsilon_{von\ Mises}^{fiber\ critical}$ for the fiber phase:

$$J_1 \geq J_1^{critical} \tag{1}$$

$$\varepsilon_{von\ Mises} \geq \varepsilon_{von\ Mises}^{critical} \tag{2}$$

$$\varepsilon_{von\ Mises}^{fiber} \geq \varepsilon_{von\ Mises}^{fiber\ critical} \tag{3}$$

The strain invariants are defined as:

$$J_1 = \varepsilon_1 + \varepsilon_2 + \varepsilon_3 \tag{4}$$

$$\varepsilon_{von\ Mises} = (1/2[(\varepsilon_1 - \varepsilon_2)^2 + (\varepsilon_1 - \varepsilon_3)^2 + (\varepsilon_2 - \varepsilon_3)^2])^{1/2} \tag{5}$$

where $\varepsilon_1$, $\varepsilon_2$, and $\varepsilon_3$ are the principal strains.

That is, for each of a plurality of gauss points defined by the structural member, strain invariants are evaluated to determine how to partition the total internal strain energy of the structural member, i.e., to determine how much of the total internal strain energy of the structural member is retained (e.g., as strain in the structural member) and how much is dispersed (e.g., as damage). The gauss points at which this evaluation is to be determined can be selected using a precise procedure, or "diagnostic." In particular, the total internal strain energy of the structural member can be partitioned using the following general equations:

$$J_1 \geq J_1^{\text{critical}} \rightarrow [\psi_i(\xi^J)E_{Ti} \in E_D]_{(i=1, 6)} \tag{6}$$

$$\varepsilon_{vM} \geq \varepsilon_{vM}^{\text{critical}} \rightarrow [\psi_i(\xi^{\varepsilon\text{von Mises}})E_{Ti} \in E_D]_{(i=1, 6)} \tag{7}$$

$$\varepsilon^{\text{fiber}}_{vM} \geq \varepsilon^{\text{fiber}}_{vM}{}^{\text{critical}} \rightarrow [\psi_i(\xi^{\text{fiber}, \varepsilon vM})E_{Ti} \in E_D]_{(i=1, 6)} \tag{8}$$

where:

i corresponds to the principal material directions (4→23, 5→13, 6→12);
$E_{Ti}$ expands to the six strain energy components of total energy;
$E_D$ is the set of all dispersed energy;
$\psi_i(\xi^\Phi)$ are the explicit damage functionals associated with each component of the total energy for each critical strain invariant $\Phi^K$, k = $J_i$, $\varepsilon_{\text{von Mises}}$ or $\varepsilon^{\text{fiber}}_{\text{von Mises}}$; and
vM indicates von Mises.

The damage functionals can be functions of the current state of deformation and the current state of damage as well as other variables, all of which are represented inclusively by $\xi$. The explicit damage functionals $\psi_i(\xi^\Phi)$ can be considered indeterminate at this point in time due to the many variables involved in their assessment as well as their various interactions.

The explicit form of the maximum energy retention (MER) can be approximated by replacing the explicit damage functionals, $\psi_i(\xi^\Phi)$ with implicit damage functionals $\xi_i\beta^\Phi$ to yield the following:

$$J_1 \geq J_1^{\text{critical}} \rightarrow [\xi_i\beta^{J1}E_{Ti} \in E_D]_{(i=1, 6)} \tag{9}$$

$$\varepsilon_{vM} \geq \varepsilon_{vM}^{\text{critical}} \rightarrow [\xi_i\beta^{\varepsilon vM}E_{Ti} \in E_D]_{(i=1, 6)} \tag{10}$$

$$\varepsilon^{\text{fiber}}_{vM} \geq \varepsilon^{\text{fiber}}_{vM}{}^{\text{critical}} \rightarrow [\xi_i\beta^{\text{fiber}, \varepsilon vM}E_{Ti} \in E_D]_{(i=1, 6)}. \tag{11}$$

The MER is, in general, the maximum value of a numerical integral such that:

$$\partial E_R^\omega / \partial \delta^i = 0 \tag{12}$$

where:

$\delta^1$ corresponds to the total current state of deformation, and
$E_R^\omega$ is the set of all retained energy (here $\omega$ represents matrix energy, fiber energy or total energy).

The implicit damage functionals $\xi_i\beta^\Phi$ include the assignment functionals $\xi_i$ and the intralaminar functionals $\beta^\Phi$. The assignment functionals are either 0 or 1, signifying that realization of the critical values of the strain invariants will result in a partitioning of all of a particular energy component of the total energy to the disposed energy set or all of a particular energy component to the retained set. That is, all energy associated with each gauss point having a critical value is typically partitioned as dispersed energy, and all energy associated with each gauss point having non-critical values is partitioned as retained energy. The intralaminar functionals are functions of the lamina properties (e.g., for unidirectional product forms, $E_{11}$, $E_{22}$, $E_{33}$, $G_{12}$, $G_{13}$, $G_{23}$, $\upsilon_{12}$, $\upsilon_{13}$, $\upsilon_{23}$, $\alpha_{11}$, $\alpha_{22}$, $\alpha_{33}$, $J_1^{\text{critical}}$, $\varepsilon_{\text{von Mises}}^{\text{critical}}$, $\varepsilon^{\text{fiber}}_{\text{von Mises}}{}^{\text{critical}}$ and the current state of deformation, where E is the linear modulus of elasticitiy, G is the torsional modulus of elasticity, v is Poisson's ration, and $\alpha$ is the coefficient of thermal expansion. As a result, $\beta^\Phi$ are functions of the effective intrinsic material properties of the composite product form (i.e., the pure product form, such as unidirectional tape lamina). Laminate properties are not used in the implicit damage functional formulation. The intralaminar damage functionals are also a function of the current state of deformation and therefore are variables, not constants.

Once Equation (12) is satisfied, interlaminar damage functionals operate on the deformed state of Equation (12) to obtain the final deformed state corresponding to the peak capacity (or onset of damage instability) of the irreversibly deformed composite structure. The interlaminar damage functional(s), $\lambda$, can be functions both of the effective lamina intrinsic material properties and derived entities such as dispersed energy and the volume from which the energy was dispersed. Therefore, the interlaminar damage functional(s) $\lambda$ are also variables.

Artificial intelligence methods and systems can be used to implement SIFT, e.g., to perform the MER analysis. In particular, an artificial intelligence device or module can be provided with a problem statement and supporting information to properly define the problem to be solved, i.e., the equations for resolving the MER analysis, the implicit damage functionals, and the rules and strategies for their implementation.

To obtain the ultimate load capacity (load environment for damage instability) of a given deformed composite structure, the strain invariants at each gauss point within the energy domain (that is, the domain enclosing the strain localization assessed for damage instability) are evaluated, e.g., using Equations (1) - (3) and (9) - (11), above. The final deformed configuration (DF$^{MER}$) at the point of MER from equation (12) is then operated on by the implicit damage functional(s) $\lambda$ to obtain the desired deformed configuration of the composite structure. The deformed configuration corresponding to the ultimate load capacity (or damage instability) of the composite structure is:

$$DF^{final} = DF^{MER}\lambda. \tag{13}$$

The theory and implementation of SIFT is further described in the following references, the entirety of each of which is incorporated herein by reference: "Strain Invariant Failure Theory; Failure Theory and Methodologies for Implementation," presented by Jon Gosse, available at http://www.compositn.net/Downloads/Presentation%20-%20Modelling%20-%20Boeing.pdf; "Damage progression by the element-failure method (EFM) and strain invariant failure theory (SIFT)," by T.E. Tay, S.H.N. Tan, V.B.C. Tan, and J.H. Gosse, Composites Science and Technology 65 (2005), 935-944, December 2004; "Application of a First Invariant Strain Criterion for Matrix Failure in Composite Materials," by R. Li, D. Kelly, and R. Ness, Journal of Composite Materials, November 2003, vol. 37, no. 22/2003, pp. 1977-2000; and "Methodology for Composite Durability Assessment," by Stephen W. Tsai and John L. Townsley, September 2003 SAMPE Technical Conference, Dayton, Ohio.

The systems and methods described below could be used for analyzing structural members that are formed of any of various materials, including non-composite materials such as metals and the like. However, the present invention is particularly useful in the analysis and manufacture of structural members that are formed of composite materials, such as the composite structural member **10** of FIG. **1,** which can be difficult to analyze by conventional methods.

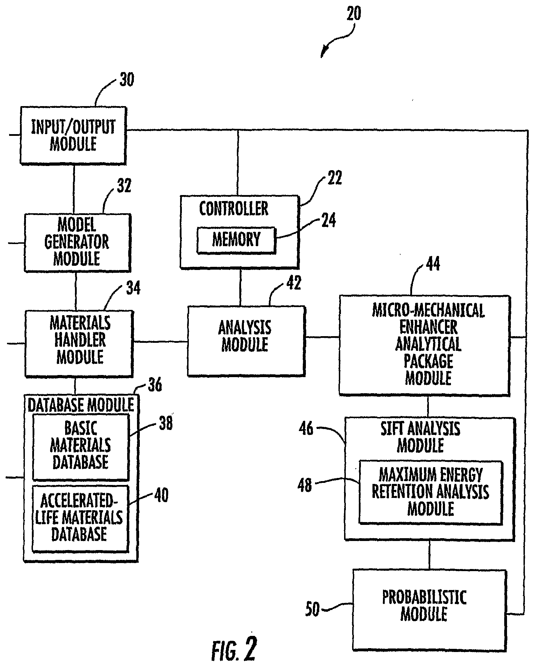

FIG. **2** schematically illustrates a system **20** for analyzing the loading capacity of the structural member according to one embodiment of the present invention. The system **20** includes a number of modules, or components, which can be separate, independent devices or integrated as one or more devices. For example, the system **20** can include a computer with a processor or controller **22,** memory **24,** and input/output ports, and the system **20** can be conFIG.d to operate as one or more of the modules. In some cases, each module can be an executable portion of a computer program product, i.e., computer-readable program code portions of a computer software program stored on a computer-readable medium such as memory **24.** Each module can be separate or integrated with the other modules, and each can operate on a computer or other device that is separate or the same as the device on which the other modules operate.

The typical communication of data between the various modules of the system **20** is also graphically illustrated in FIG. **2** and described below; however, it is appreciated that each of the modules can be configured to communicate with some or all of the other modules, and the modules can communicate according to any of various communication protocols. The data communicated into, within, and from the system **20** can be communicated as files, time varying signals, or the like, and can be communicated between the modules as internal or external communications according to the configuration of the modules. For example, in one embodiment, the modules communicate by successively storing and retrieving data in files, and the files can be stored in a memory, disk drive, or the like. In particular, the various modules can communicate data to and from a memory that is associated with the controller **22.**

As illustrated in FIG. **2,** the system **20** includes an input/output module **30** for receiving information from a user and providing information to the user. The input/output module **30** can include an input device, such as a keyboard or the like for receiving the user's entries, and a video monitor or other output device for presenting information to the user. The input/output device **30** can be an independently controlled device, such as a personal computer or computer workstation. Alternatively, as shown in Figure 2, the input/output device can be controlled by the controller **22,** which can be configured to communicate with and/or control other modules of the system **20.**

The input/output module **30** is configured to communicate data to a model generator module **32.** Thus, the model generator module **32** can be configured to provide a parameterized user interface via the input/output module by which a user can enter model data to define a model configuration of a structural member. The model generator module **32** can also be configured to receive all of the material properties for the structural member from the user. However, a materials handler module **34** is typically provided to receive or retrieve at least some of the data from a database module **36,** which can include one or more databases **38, 40,** so that the user need not enter the data. Thus, the materials handler module **34** is configured to receive or retrieve data regarding the structural member, e.g., by receiving the input model data from the model generator module **32** and by retrieving corresponding material property data from the one or more databases **38, 40** of the database module **36.** The materials handler module **34** can provide the data to the rest of the system **20** for analysis. In particular, the data can be provided to an analysis module **42,** a micro-mechanical enhancer analytical package **44,** a SIFT analysis module **46,** and/or a probabilistic module **50.**

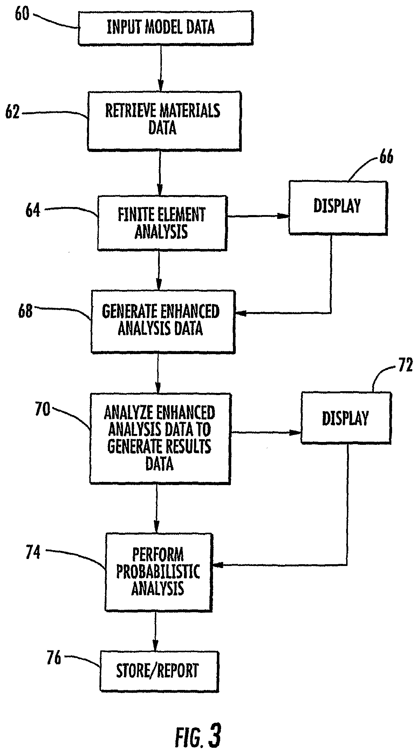

The operations for analyzing a structural member according to one embodiment of the present invention are illustrated in FIG. **3.** As illustrated, the model data is input into the system **20,** typically by the user using the input/output module **30.** See block 60. Based on the user input model data, the model generator **32** provides design-basis values to the materials handler module **34,** i.e., data that is characteristic of the structural member being modeled and the conditions under which the structural member is to be modeled. The materials handler module **34** retrieves from the database module **36** material property data that corresponds to the material of the model structural member, i.e., according to the model data. See block 62. The model data and material data are provided as analysis data to the analysis module **42,** which typically performs finite element analysis to generate homogenized analysis data representative of the structural member. See block 64. The analysis module **42** can also display the data as a graphic representation of the structural member. See block 66. The micro-mechanical enhancer analytical package module **44** receives the homogenized analysis data and generates enhanced analysis data that includes an enhanced set of strain tensors. The enhanced strain tensors are characteristic of a failure condition for the composite member. That is, the enhanced strain tensors are representative of the micromechanical behavior of the structural member under the minimal conditions that result in failure of the member. See block 68. The SIFT analysis module **46** receives the enhanced analysis data and performs a SIFT analysis of the data, thereby generating results data representative of the load conditions that result in damage instability in the structural member, the likely location of the instability, and the likely direction and/or path of progression of the instability. See block 70. The results data can be further analyzed by the probabilistic module **50,** which performs a probabilistic analysis to determine likely variations in the results data that may occur due to probabilistically likely variations in the material or composition of the structural member, variations in the geometric configuration of the structural member, and the like. See block 74. The data resulting from each of the analysis modules can be stored and/or reported, e.g., by storing the data in a computer file and/or displaying a graphic representation of the data to the user on a video monitor. See, e.g., block 72.

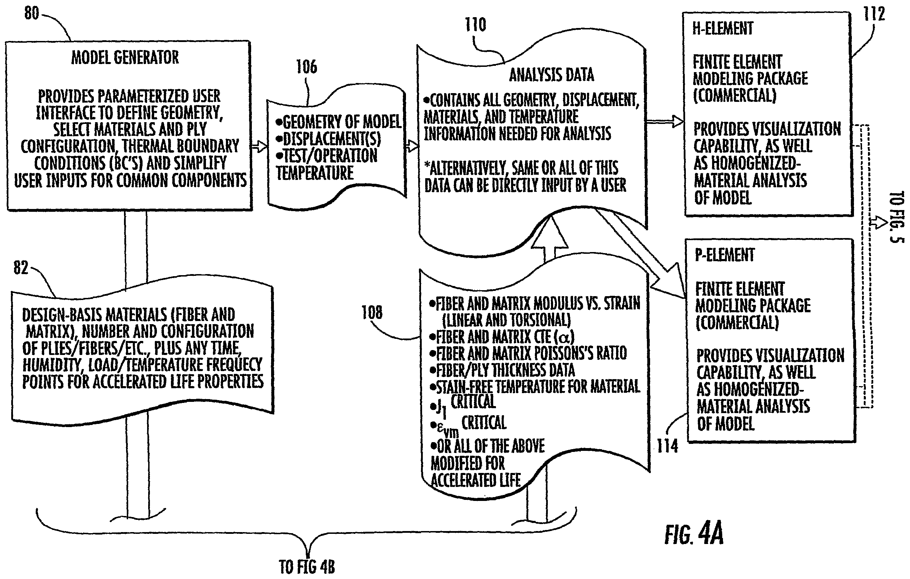

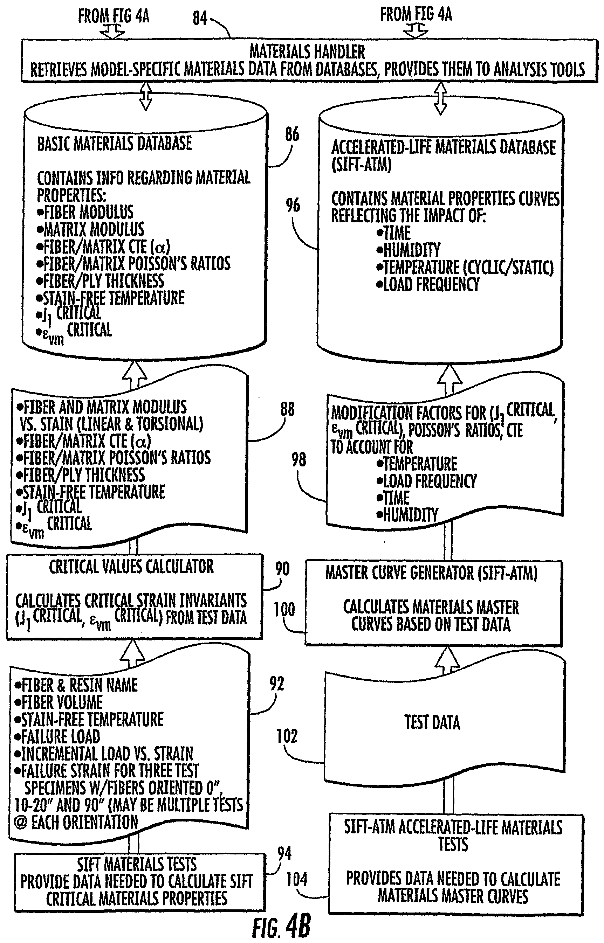

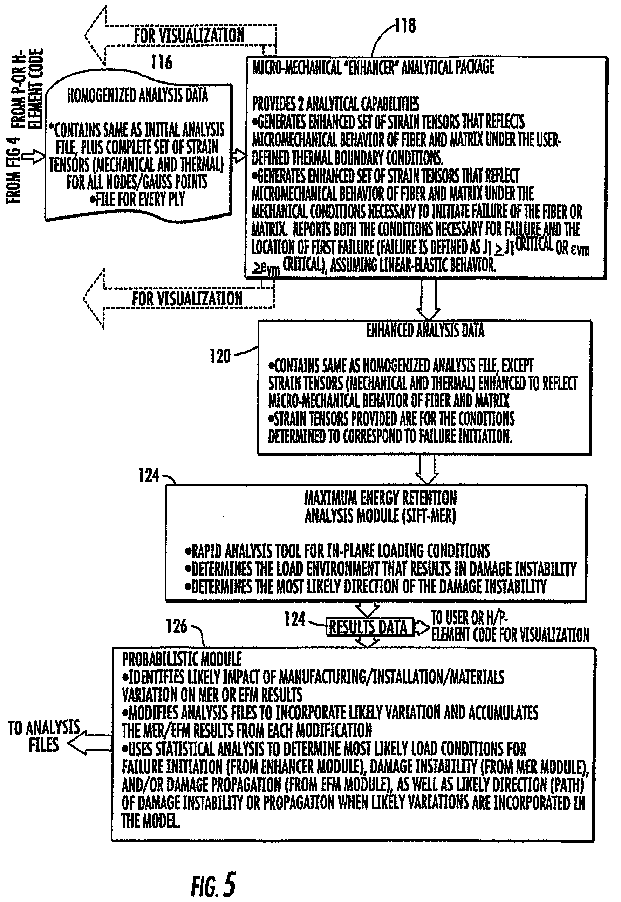

FIGS. **4** and **5** schematically illustrate with greater detail the operation of select portions of a system **20** according to one embodiment of the present invention for analyzing the loading capacity of a structural member made of a composite material. As noted above, the model generator **32** receives model data, typically from the input/output module **30,** such as a keyboard, mouse, or other device, or from a pre-constructed data file. See block 80. The model data can include information characteristic of the physical structure of the member, such as a geometry of the member; the particular material(s) from which the member is formed; the configuration of the materials, such as the structure, size, number, and layout of fibers in a matrix material of a composite structural member; and the structure, size, number, and layout of layers, plies, or other portions of the member. In addition, the model data can include load data, i.e., information characteristic of the loading condition of the structural member, such as the magnitude, location, direction, and timing of loads or forces that are to be applied to the structural member; the magnitude, location, and timing of thermal conditions to which the structural member is to be exposed, such as thermal boundary conditions that are to exist at one or more ends of the member; the magnitude, location, timing, and type of humidity or other conditions in the environment of the structural member; and other characteristics of the composite member, its environment, and its use.

The model generator can provide a parameterized user interface, e.g., a graphical user interface via the input/output module **30** by which the user can define values for various predefined parameters of a composite member model including, but not limited to, parameters regarding the shape, geometric configuration, and composition of the composite member model as well as each of the loads, temperature, humidity, and other conditions applied to the composite member model as a function of time.

Based on the user input, the model generator module **32** provides design-basis values to the materials handler module **34,** including the fiber and matrix materials of the composite member, the number and configuration of plies, fibers, and/or other constituents of the member, as well as values representative of test or use conditions for the composite member, such as time or duration of use, humidity schedule, temperature schedule, and loading schedule. See block 82.

The materials handler module **34** receives the input model data from the model generator module **32** and retrieves material property data from one or both of the databases **38, 40.** See block 84. The basic materials database **38** contains information regarding material properties for one or more materials from which the composite member can be formed. See block 86. The data stored in the basic materials database **38** can be generated from test data that results from physical tests. See block 94. The test data can include for each type of composite material such information as the following: the names of the fiber and resin of the composite material; the volume of fiber in a unit volume of the composite material; a temperature at which the composite material is substantially strain-free; an incremental relationship between load and strain for the unidirectional composite material; values representative of typical failure strain for unidirectional test specimens with various fiber orientations. See block 92.

A critical value calculator module is configured to receive the mechanical unidirectional test data and use the test data to generate critical strain invariant values for the composite materials. See block 90. In particular, the critical strain invariant values can be determined empirically, by conducting tests of a unidirectional test coupon and evaluating equations (1)-(3) above at the location of failure.

Thus, in addition to any of the test data, the basic materials database **38** can be provided with values corresponding to such properties for each material as the following: fiber modulus, i.e., the modulus of elasticity of the fibers of the composite material; matrix modulus, i.e., the modulus of elasticity of the matrix material of the composite material; coefficients of thermal expansions representative of each of the fiber and matrix materials; Poisson's ratios representative of each of the fiber and matrix materials; thicknesses or other geometric aspects of the fibers and/or the plies or layers of the composite material; a temperature of the composite material at which the material is strain-free; and critical strain invariants for the materials. See block 88. These and other values stored in the basic materials database can be provided by the critical values calculator, by manual or automatic entry of values determined empirically such as by material tests, by manual or automatic entry of values determined theoretically, or by other methods.

The accelerated-life materials database **40** contains information that is generally representative of variations to the basic material properties, such as changes in the properties that can occur due to life conditions including the passage of time; exposure to environmental conditions such as humidity, static temperatures, or cyclic temperature variation; and physical loading characteristics including magnitude and frequency of loading. See block 96. The data to be stored in the accelerated-life materials database **40** can be generated from test data that results from physical tests, i.e., accelerated-life materials tests, as indicated in FIG. **4.** See block 104. For example, the test data can include material names and associated values representative of the material properties of various materials that are tested under different conditions, such as after exposure to atmospheric conditions, loading, and the like. See block 102.

The results of the material tests conducted for generating the data to be stored in the accelerated-life materials database **40** can be processed in the master curve generator module. See block 100. In particular, the master curve generator module can generate master curves that incorporate modification factors to account for each of the life conditions of the materials. For example, the master curves can provide modification factors for modifying the critical strain invariants, Poisson's ratio, elastic moduli and coefficient of thermal expansion for each of various materials to adjust for life conditions such as age, exposure to temperatures, or exposure to loading. See block 98. The master curve generator can calculate such modification factors and master curves, e.g., by extrapolating data from the life materials tests so that the master curve generator can generate modification factors and curve data for life conditions that have not been tested, such as long passages of time or exposure to specific and/or extreme temperature, humidity, or loading conditions. In some cases, these and other curves or values can be otherwise provided and stored in the accelerated-life materials database, e.g., by manual or automatic entry of values determined empirically such as by material tests, by manual or automatic entry of values determined theoretically, or by other methods. The accelerated-life materials database **40** and the basic materials database **38** can be provided by a single combined database in some embodiments.

Thus, the model generator module **32** and the materials handler module **34** are configured to provide data representative of a specific configuration and operative condition for a composite member, such that the data can be used to perform a modeling operation. In this regard, the model generator and the materials handler modules **32, 34** are configured to communicate the analysis data to an analysis module **42**. The analysis data typically includes information regarding the geometry, loading, displacement, temperature, and the like. See block 110. The analysis data can include a schedule for each use condition, and each schedule can indicate the variation of one or more conditions over a specified period of time of use, such as a loading schedule that indicates intermittent loading or loading that is otherwise nonuniform over time. The analysis data can be provided by one or both of the model generator module **32** and the materials handler module **34**. For example, as illustrated in FIG. **4,** the model generator module **32** can provide a portion of the analysis data, such as the data relating to the geometry, displacement, and temperature, while the materials handler module **34** can provide the remaining data, such as the material properties. See blocks 106, 108. Alternatively, the data can be provided by other methods, such as by manual entry by a user or automated entry from another computer-based analysis tool. In any case, the data can be modified according to accelerated life values, such as the master curves generated by the master curve generator, to reflect changes in the material properties resulting from extended passages of time, exposure to particular environmental conditions, and the like.

The analysis data is communicated or otherwise provided to the analysis module **42,** which typically performs homogenized-material analysis of the analysis data. For example, the analysis module **42** can be any of various conventional computer software packages for performing finite element analysis, such as StressCheck available from ESRD, Inc, analysis programs available from ANSYS, Inc. of Canonsburg, PA, or the like. As illustrated in FIG. **4,** the analysis module **42** can include one or more types of analysis tools, such as a "h-element" finite element modeling package or a "p-element" finite element modeling package, which packages are known in the industry. See blocks 112, 114. By "homogenized-material analysis," it is meant that the analysis module models the composite member as having homogenized or uniform layers or portions, even though the actual composite member being modeled may be nonuniform within each layer or portion, e.g., including fibers, matrix materials, three-dimensional stitchings, and the like with distinct properties. See blocks 116. The homogenized data typically includes the analysis data as well as a complete set of strain tensors (both mechanical, thermal, etc.) for all nodes or gauss points of each layer or ply of the composite member.

The analysis module **42** then passes the homogenized analysis data to the micro-mechanical enhancer analytical package module **44.** In addition, the analysis module **42** or the micro-mechanical enhancer analytical package module **44** can also provide a visualization capability, e.g., by illustrating a graphical representation of the composite member, applied loads or other conditions, stresses and strains in the composite member resulting from the loads and conditions, failure points and modes, and the like. The graphical representation can be provided directly to the user on a video monitor such as a cathode ray tube or liquid crystal display of the input/output module **30,** such that the user can confirm the characteristics of the input model and conditions and/or iteratively modify the model or conditions.

The micro-mechanical enhancer analytical package module **44** receives the homogenized data and generates enhanced analysis data. See block 118. In particular, the micro-mechanical enhancer analytical package module **44** generates an enhanced set of strain tensors that reflects the interactive micromechanical behavior of the fiber and matrix of the composite material under the user-defined thermal boundary conditions. See block 120. In addition, the micro-mechanical enhancer analytical package module **44** generates an enhanced set of strain tensors that reflect the interactive micromechanical behavior of the fiber and matrix under the mechanical conditions necessary to initiate failure of the fiber or matrix. In particular, the micro-mechanical enhancer analytical package module **44** determines the minimum conditions necessary for failure and the location of first failure. The enhanced analysis data communicated by the micro-mechanical enhancer analytical package module **44** typically includes the homogenized analysis data with the exception that the strain tensors (mechanical, thermal, etc.) are enhanced to reflect the interactive micro-mechanical behavior of the fiber and matrix materials. The strain tensors for the conditions determined to correspond to a failure initiation are also provided.

The enhancement factors used to generate enhanced analysis data for composite materials from homogenized data are determined through analysis of a representative volume of the composite material explicitly containing matrix and fiber materials of interest. The representative volume would typically include all the properties necessary to represent all the materials in the composite system in the composite member of interest; e.g., linear and tortional moduli of elasticity, coefficients of thermal expansion, Poisson's ratios, the volume fractions consisting of each material in the composite system, the directionality of any anisotropic materials, and the like. This representative volume can then be analyzed under loading conditions of interest, such as applied displacements, loads or both, and temperature changes, to determine the strain amplification at selected locations within the various material elements of the representative volume. These amplified strains at the selected locations in the various material elements of the representative volume under each loading condition corresponding the six tensoral strain states as well as the temperature changes, are then normalized and used as the micromechanical enhancement factors for the analysis. These factors are used to convert homogenized analysis data to enhanced analysis data by multiplying the homogenized strains by the enhancement factors for each location of interest in the composite system, e.g., inside the composite fibers and matrix material, to determine the enhanced strain values at each location of interest in the composite member.

The enhanced analysis data can be provided to a SIFT analysis module **48,** such as a maximum energy retention (MER) analysis module, which is configured to analyze the enhanced data to generate results data. See block 122. The SIFT analysis module **48** receives the enhanced data for a plurality of gauss points within the structure of interest, and uses that data to evaluate equations 9-12 as described above. This module **48** evaluates the complete set of enhanced strains present at each location of interest in the fiber and compares the resulting strain invariants to the critical strain invariants to determine whether damage exists at a particular location within the composite member.

If analytical information regarding the progression, rather than simply the existence, of damage is desired, it is possible, to assess damage progression in an iterative or progressive manner. This requires a method for indicating the existence of damage in a particular location, and repeating the analysis with the existence of damage suitably accounted for. There are several possible methods for performing this type of iterative analysis, one of which is outlined in "Damage progression by the element-failure method (EFM) and strain invariant failure theory (SIFT)," by T.E. Tay, S.H.N. Tan, V.B.C. Tan, and J.H. Gosse, which is incorporated above.

The results of the analysis conducted in the SIFT analysis module **48** are output from the respective module as results data. See block 124. The results data can be output to the user and/or the analysis module **42,** e.g., for storing as a data file or for use in generating a graphic representation of the results data using the graphic display capabilities of the analysis module **42.**

The results data can also be provided to the probabilistic module **50.** See block 126. The probabilistic module **50** typically identifies the effects on the results data due to likely variations in the composite member that result from manufacturing, installation, and/or material variation. For example, the probabilistic module **50** can store or determine probabilistically likely variations in the material of the fiber and matrix phases of the composite member, variations in the amount or configuration of the fiber phase material, variations in the overall shape or configuration of the member, and the like. The probabilistic module **50** can then perform an analysis of the composite member, e.g., using the other analysis modules **42, 44, 46,** assuming the different probabilistically likely variations. Thus, the enhanced analysis data, and results data for each of these likely variations can be determined and stored. The probabilistic module **50** can use the enhanced analysis data to determine what load conditions are statistically most likely to result in failure initiation, the SIFT results data to determine what load conditions are statistically most likely to result in damage instability, or propagation, as well as the likely direction and/or path of damage instability or propagation when the likely variations are incorporated into the model. The output data from the probabilistic module **50** can be provided in analysis files, which can be stored and/or reported to the user via the input/output module **30.**

In some cases, the system **20** can be configured to automatically adjust an attribute of the modeled composite member and reanalyze the member accordingly. For example, upon calculation of the results data at block 124 or the output from the probabilistic module **50** at block 126, the system **20** can automatically adjust the model data to reflect an adjustment to a dimension of the composite member, a material of the composite member, a geometric configuration of the member, or the like. Such adjustment is typically performed by the model generator **32** or one of the analysis modules **42, 44, 46, 50,** or can be performed by another portion of the controller **22** or a separate device. The system can then return to block 80 for reanalysis of the composite member using the adjusted model data. Thus, the system **20** can be configured to iteratively analyze and adjust the model data until a set of model data is provided that achieves predetermined criteria such as minimum load capacity for given probabilistically likely variations and preferences for the model data such as weight or size criteria.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A system (20) for analyzing a load capacity of a composite member, the composite member being a structural member formed of a composite material that includes a fiber phase defined by a plurality of fiber reinforcement members and a matrix phase defined by a matrix material in which the fibers are disposed, the system comprising:

   an input/output module (30) for receiving model data from a user, the received model data being characteristic of a configuration and load condition of the structural member;
   a model generator module (32) configured to provide an interface via the input/output module (30) and receive the model data from the input/output module (30);
   a database module (36) including at least one database of material properties for a plurality of composite materials;
   a materials handler module (34) configured to receive the model data from the model generator module (32) and retrieve corresponding material property data from the database module (36), the material property data being characteristic of material properties of the composite material;
   an analysis module (42) configured to perform a finite element analysis of the model data according to the material property data from the materials handler module (34) to generate homogenized analysis data which represents the composite member as having homogenized layers or portions, the homogenized data including a set of strain tensors for gauss points of the composite member;
   a micro-mechanical enhancer analytical package module (44) configured to receive the homogenized analysis data and generate enhanced analysis data, the enhanced analysis data including an enhanced set of strain tensors that reflect the interactive micro-mechanical behaviour of the fiber and matrix of the composite material under the mechanical conditions necessary to initiate failure of the fiber or matrix, thereby being characteristic of a failure condition for the composite member; and
   a SIFT analysis module (46) configured to receive the enhanced analysis data and use a strain invariant failure theory of analysis to generate results data representative of load conditions resulting in damage instability in the composite member;
   wherein the materials handler module (34) is configured to provide at least one fiber phase critical strain invariant for the composite material of the composite member, and the analysis, micro-mechanical enhancer analytical package, and SIFT analysis modules (34) are configured to repeat the following steps for different predetermined loads to thereby calculate a critical load corresponding to a maximum energy retained:

   determining a plurality of matrix phase strain invariant values for the composite material of the composite member, each matrix phase strain invariant value corresponding to a strain condition of one of a plurality of gauss points of the matrix phase of the composite member due to a predetermined load on the composite member;

determining a plurality of fiber phase strain invariant values for the composite material of the composite member, each fiber phase strain invariant value corresponding to a strain condition of one of a plurality of gauss points of the fiber phase of the composite member due to the predetermined load on the composite member;

comparing each matrix phase strain invariant value to the matrix phase critical strain invariant, and comparing each fiber phase strain invariant value to the fiber phase critical strain invariant to identify a criticality of each gauss point for the predetermined load; and

determining a partition of a total strain energy for the predetermined load, the total strain energy being partitioned between retained energy and dispersed energy according to the criticality of the gauss points,

wherein the SIFT analysis module (46) is configured to partition strain energy associated with each critical gauss point as dispersed energy and strain energy associated with each non-critical gauss point as retained energy to thereby determine the partition of the total strain energy.

2. A system (20) according to Claim 1 wherein the SIFT analysis module (46) is configured to generate results data comprising at least one of the group consisting of the likely direction and path of progression of the instability.

3. A system (20) according to Claim 1 wherein the SIFT analysis module (46) is configured to calculate the critical load by determining a maximum energy retention according to implicit damage functionals based on lamina properties of the composite member.

4. A system (20) according to Claim 1 wherein the SIFT analysis module (46) is configured to calculate the critical load by determining a damage functional according to a ratio of retained energy of the structural member to total internal strain energy of the structural member.

5. A system (20) according to Claim 1 wherein the system is configured to adjust the model data to adjust a dimension of the composite member according to the calculated load capacity.

6. A system (20) according to Claim 1 wherein the database module (36) includes a plurality of databases, at least one of the databases including accelerated-life materials information representative of variations in the materials properties due to at least one of the group consisting of passage of time, exposure to humidity, exposure to temperature, and physical loading.

## Patentansprüche

1. System (20) zum Analysieren einer Belastbarkeit eines Verbundelements, wobei das Verbundelement ein Bauteil ist, das aus einem Verbundmaterial geformt ist, das eine durch eine Vielzahl von Faserverstärkungselementen definierte Faser-Phase und eine Matrix-Phase enthält, die durch ein Matrixmaterial definiert ist, in dem die Fasern verteilt sind, wobei das System umfasst:

ein Eingangs-/Ausgangs-Modul (30) zum Empfangen von Modelldaten von einem Nutzer, wobei die empfangenen Modelldaten für eine Konfiguration und einen Belastungszustand des Bauteils charakteristisch sind;
ein Modellgenerator-Modul (32), das dazu eingerichtet ist, über das Eingangs-/Ausgangs-Modul (30) eine Schnittstelle bereitzustellen und die Modelldaten von dem Eingangs-/Ausgangs-Modul (30) zu empfangen;
ein Datenspeicher-Modul (36), das mindestens einen Datenspeicher von Materialeigenschaften für eine Vielzahl von Verbundmaterialien enthält;
ein Material-Handler-Modul (34), das dazu eingerichtet ist, die Modelldaten von dem Modellgenerator-Modul (32) zu empfangen und entsprechende Materialeigenschafts-Daten von dem Datenspeicher-Modul (36) zu gewinnen, wobei die Materialeigenschafts-Daten für Materialeigenschaften des Verbundmaterials charakteristisch sind;
ein Analyse-Modul (42), das dazu eingerichtet ist, eine Finite-Elemente-Analyse der Modelldaten entsprechend den Materialeigenschafts-Daten von dem Material-Handler-Modul (34) durchzuführen, um homogenisierte Analysedaten zu erzeugen, die das Verbundelement in Form von homogenisierten Schichten oder Teilen darstellen, wobei die homogenisierten Daten einen Satz von Verformungstensoren für Gauss-Punkte des Verbundelements beinhalten;

ein Mikromechanik-bezogenes Analysepaketverbesserungs-Modul (44), das dazu eingerichtet ist, die homogenisierten Analysedaten zu empfangen und verbesserte Analysedaten zu erzeugen, wobei die verbesserten Analysedaten einen verbesserten Satz von Verformungstensoren beinhalten, die das interaktive mikromechanische Verhalten der Faser und der Matrix des Verbundmaterials unter den mechanischen Bedingungen wiedergeben, die notwendig sind, um einen Defekt der Faser oder der Matrix auszulösen, und dadurch für eine Defekt-Bedingung für das Verbundelement charakteristisch sind, und

ein Analyse-Modul zur skaleninvarianten Merkmalstransformation (SIFT-Analyse-Modul) (46), das dazu eingerichtet ist, die verbesserten Analysedaten zu empfangen und eine Verformungs-invariante Ausfalltheorie der Analyse zu verwenden, um Ergebnisdaten zu erzeugen, die für Belastungsbedingungen repräsentativ sind, die zu einer schadensbedingten Instabilität in dem Verbundelement führen,

wobei das Material-Handler-Modul (34) dazu eingerichtet ist, mindestens eine kritische Verformungs-Invariante der Faser-Phase für das Verbundmaterial des Verbundelements zu liefern, und das Analyse-Modul, das Mikromechanik-bezogene Analysepaketverbesserungs-Modul und das SIFT-Analyse-Modul (34) dazu eingerichtet sind, die folgenden Schritte für verschiedene vorgegebene Belastungen zu wiederholen und dadurch eine kritische Belastung zu berechnen, die einer maximalen Energierückhaltung entspricht:

Bestimmen einer Vielzahl von Verformungs-invarianten Werten der Matrix-Phase für das Verbundmaterial des Verbundelements, wobei jeder Verformungs-invariante Wert der Matrix-Phase einer Verformungsbedingung eines Gauss-Punktes einer Vielzahl von Gauss-Punkten der Matrix-Phase des Verbundelements aufgrund einer vorgegebenen Belastung des Verbundelements entspricht;

Bestimmen einer Vielzahl von Verformungs-invarianten Werten der Faser-Phase für das Verbundmaterial des Verbundelements, wobei jeder Verformungs-invariante Wert der Faser-Phase einer Verformungsbedingung eines Gauss-Punktes einer Vielzahl von Gauss-Punkten der Faser-Phase des Verbundelements aufgrund einer vorgegebenen Belastung des Verbundelements entspricht;

Vergleichen jedes Verformungs-invarianten Wertes der Matrix-Phase mit der kritischen Verformungs-Invariante der Matrix-Phase und Vergleichen jedes Verformungs-invarianten Wertes der Faser-Phase mit der kritischen Verformungs-Invariante der Faser-Phase, um eine Kritikalität jedes Gauss-Punktes für die vorgegebene Belastung zu identifizieren, und

Bestimmen einer Aufteilung einer gesamten Verformungsenergie für die vorgegebene Belastung, wobei die gesamte Verformungsenergie entsprechend der Kritikalität der Gauss-Punkte zwischen rückgehaltener und dispergierter Energie aufgeteilt wird,

wobei das SIFT-Analyse-Modul (46) dazu eingerichtet ist, Verformungsenergie, die jedem kritischen Gauss-Punkt zugeordnet ist, als dispergierte Energie und Verformungsenergie, die jedem nicht-kritischen Gauss-Punkt zugeordnet ist, als rückgehaltene Energie aufzuteilen, um dadurch die Aufteilung der gesamten Verformungsenergie zu ermitteln.

2.  System (20) nach Anspruch 1, bei dem das SIFT-Analyse-Modul (46) dazu eingerichtet ist, Ergebnisdaten zu erzeugen, die mindestens ein Element der Gruppe umfassen, die besteht aus der wahrscheinlichen Richtung und dem wahrscheinlichen Weg des Fortschreitens der Instabilität.

3.  System (20) nach Anspruch 1, bei dem das SIFT-Analyse-Modul (46) dazu eingerichtet ist, die kritische Belastung durch Bestimmen einer maximalen Energieretention gemäß impliziten Defekt-Funktionalen auf der Basis von Eigenschaften von dünnen Schichten des Verbundelements zu berechnen.

4.  System (20) nach Anspruch 1, bei dem das SIFT-Analyse-Modul (46) dazu eingerichtet ist, die kritische Belastung durch Bestimmen eines Defekt-Funktionals entsprechend einem Verhältnis von rückgehaltener Energie des Bauteils zu gesamter innerer Verformungsenergie des Bauteils zu berechnen.

5.  System (20) nach Anspruch 1, wobei das System dazu eingerichtet ist, die Modelldaten anzupassen, um eine Dimension des Verbundelements entsprechend der berechneten Belastbarkeit anzupassen.

6.  System (20) nach Anspruch 1, bei dem das Datenspeicher-Modul (36) eine Vielzahl von Datenspeichern enthält, wobei mindestens einer der Datenspeicher beschleunigte Lebensdauer-Informationen von Materialien enthält, die für Variationen in den Eigenschaften von Materialien aufgrund von Zeitablauf und/oder Feuchtigkeits-Exposition und/oder Temperatur-Exposition und/oder physikalischer Belastung repräsentativ sind.

**Revendications**

1. Système (20) d'analyse d'une capacité de charge d'un élément composite, l'élément composite étant un élément structurel formé d'un matériau composite qui comprend une phase fibreuse définie par une pluralité d'éléments de renfort de fibre et une phase matricielle définie par un matériau matriciel dans lequel les fibres sont disposées, le système comprenant :

un module d'entrée/de sortie (30) destiné à recevoir des données de modèle de la part d'un utilisateur, les données de modèle reçues étant caractéristiques d'une configuration et d'une condition de charge de l'élément structurel ;
un module de génération de modèle (32) configuré pour offrir une interface via le module d'entrée/de sortie (30) et pour recevoir les données de modèle de la part du module d'entrée/de sortie (30) ;
un module de base de données (36) comprenant au moins une base de données de propriétés matérielles pour une pluralité de matériaux composites ;
un module de manipulation de matériaux (34) configuré pour recevoir les données de modèle de la part du module de génération de modèle (32) et pour rechercher des données de propriétés matérielles correspondantes auprès du module de base de données (36), les données de propriétés matérielles étant caractéristiques des propriétés matérielles du matériau composite ;
un module d'analyse (42) configuré pour effectuer une analyse par éléments finis des données de modèle selon les données de propriétés matérielles issues du module de manipulation de matériaux (34) afin de générer des données d'analyse homogénéisées qui représentent l'élément composite comme ayant des couches ou des parties homogénéisées, les données homogénéisées comprenant un ensemble de tenseurs de déformation pour les points gaussiens de l'élément composite ;
un module d'analyse à amplificateur micromécanique (44) configuré pour recevoir les données d'analyse homogénéisées et pour générer des données d'analyse améliorées, les données d'analyse améliorées comprenant un ensemble amélioré de tenseurs de déformation qui reflètent le comportement micromécanique interactif de la fibre et de la matrice du matériau composite dans les conditions mécaniques nécessaires pour déclencher une défaillance de la fibre ou de la matrice, qui est caractéristique d'une condition de défaillance de l'élément composite ; et
un module d'analyse SIFT (46) configuré pour recevoir les données d'analyse améliorées et pour utiliser une théorie d'analyse de défaillance à défaillance invariante afin de générer des données de résultats représentatives des conditions de charge qui provoquent une instabilité de dommages dans l'élément composite ;
dans lequel le module de manipulation de matériaux (34) est configuré pour offrir au moins une déformation critique de phase fibreuse invariante pour le matériau composite de l'élément composite, et les modules d'analyse, d'analyse à amplificateur micromécanique, et d'analyse SIFT (34) sont configurés pour répéter les étapes suivantes pour différentes charges prédéterminées afin de calculer une charge critique correspondant à une énergie maximale conservée :

en déterminant une pluralité de valeurs de phase matricielle à déformation invariante pour le matériau composite de l'élément composite, chaque valeur de phase matricielle à déformation invariante correspondant à une condition de déformation de l'un d'une pluralité de points gaussiens de la phase matricielle de l'élément composite due à une charge prédéterminée sur l'élément composite ;
en déterminant une pluralité de valeurs de phase fibreuse à déformation invariante pour le matériau composite de l'élément composite, chaque valeur de phase fibreuse à déformation invariante correspondant à une condition de déformation de l'un d'une pluralité de points gaussiens de la phase fibreuse de l'élément composite due à la charge prédéterminée sur l'élément composite ;
en comparant chaque valeur de phase matricielle à déformation invariante avec la valeur critique de phase matricielle à déformation invariante, et en comparant chaque valeur de phase fibreuse à déformation invariante avec la valeur critique de phase fibreuse à déformation invariante afin d'identifier une criticité de chaque point gaussien pour la charge prédéterminée ; et
en déterminant une partition d'une énergie de déformation totale pour la charge prédéterminée, l'énergie de déformation totale étant partitionnée entre l'énergie conservée et l'énergie dispersée selon la criticité des points gaussiens,
dans lequel le module d'analyse SIFT (46) est configuré pour partitionner l'énergie de déformation associée à chaque point gaussien critique en tant qu'énergie dispersée et l'énergie de déformation associée à chaque point gaussien non critique en tant qu'énergie conservée afin de déterminer la partition de l'énergie de déformation totale.

**2.** Système (20) selon la revendication 1, dans lequel le module d'analyse SIFT (46) est configuré pour générer des données de résultats comprenant au moins l'un du groupe consistant en la direction probable et le trajet de progression de l'instabilité.

**3.** Système (20) selon la revendication 1, dans lequel le module d'analyse SIFT (46) est configuré pour calculer la charge critique en déterminant une conservation d'énergie maximale selon les calculs fonctionnels de dommages implicites sur la base des propriétés de lamination de l'élément composite.

**4.** Système (20) selon la revendication 1, dans lequel le module d'analyse SIFT (46) est configuré pour calculer la charge critique en déterminant un calcul fonctionnel de dommages selon un rapport entre l'énergie conservée de l'élément structurel et l'énergie de déformation interne totale de l'élément structurel.

**5.** Système (20) selon la revendication 1, dans lequel le système est configuré pour ajuster les données de modèle afin d'ajuster une dimension de l'élément composite selon la capacité de charge calculée.

**6.** Système (20) selon la revendication 1, dans lequel le module de base de données (36) comprend une pluralité de bases de données, au moins l'une des bases de données comprenant des informations de matériaux à vieillissement accéléré représentatives des variations des propriétés des matériaux dues à au moins l'un du groupe consistant en la durée, l'exposition à l'humidité, l'exposition à la température, et le chargement physique.

FIG. 1

FIG. 2

60 — INPUT MODEL DATA

62 — RETRIEVE MATERIALS DATA

64 — FINITE ELEMENT ANALYSIS

66 — DISPLAY

68 — GENERATE ENHANCED ANALYSIS DATA

70 — ANALYZE ENHANCED ANALYSIS DATA TO GENERATE RESULTS DATA

72 — DISPLAY

74 — PERFORM PROBABILISTIC ANALYSIS

76 — STORE/REPORT

FIG. 3

FIG. 4A

**80 MODEL GENERATOR**

PROVIDES PARAMETERIZED USER INTERFACE TO DEFINE GEOMETRY, SELECT MATERIALS AND PLY CONFIGURATION, THERMAL BOUNDARY CONDITIONS (BC'S) AND SIMPLIFY USER INPUTS FOR COMMON COMPONENTS

**82** DESIGN-BASIS MATERIALS (FIBER AND MATRIX), NUMBER AND CONFIGURATION OF PLIES/FIBERS/ETC., PLUS ANY TIME, HUMIDITY, LOAD/TEMPERATURE FREQUECY POINTS FOR ACCELERATED LIFE PROPERTIES

**106**
- GEOMETRY OF MODEL
- DISPLACEMENT(S)
- TEST/OPERATION TEMPERATURE

**108**
- FIBER AND MATRIX MODULUS VS. STRAIN (LINEAR AND TORSIONAL)
- FIBER AND MATRIX CTE ($\alpha$)
- FIBER AND MATRIX POISSONS'S RATIO
- FIBER/PLY THICKNESS DATA
- STAIN-FREE TEMPERATURE FOR MATERIAL
- $J_1$ CRITICAL
- $\varepsilon_{vm}$ CRITICAL
- OR ALL OF THE ABOVE MODIFIED FOR ACCELERATED LIFE

**110 ANALYSIS DATA**
- CONTAINS ALL GEOMETRY, DISPLACEMENT, MATERIALS, AND TEMPERATURE INFORMATION NEEDED FOR ANALYSIS

*ALTERNATIVELY, SAME OR ALL OF THIS DATA CAN BE DIRECTLY INPUT BY A USER

**H-ELEMENT 112**

FINITE ELEMENT MODELING PACKAGE (COMMERCIAL)

PROVIDES VISUALIZATION CAPABILITY, AS WELL AS HOMOGENIZED-MATERIAL ANALYSIS OF MODEL

**P-ELEMENT 114**

FINITE ELEMENT MODELING PACKAGE (COMMERCIAL)

PROVIDES VISUALIZATION CAPABILITY, AS WELL AS HOMOGENIZED-MATERIAL ANALYSIS OF MODEL

TO FIG. 5

TO FIG 4B

FROM FIG 4A    84        FROM FIG 4A

**MATERIALS HANDLER**
RETRIEVES MODEL-SPECIFIC MATERIALS DATA FROM DATABASES, PROVIDES THEM TO ANALYSIS TOOLS

86

**BASIC MATERIALS DATABASE**

CONTAINS INFO REGARDING MATERIAL
PROPERTIES:
- FIBER MODULUS
- MATRIX MODULUS
- FIBER/MATRIX CTE ($\alpha$)
- FIBER/MATRIX POISSON'S RATIOS
- FIBER/PLY THICKNESS
- STAIN-FREE TEMPERATURE
- $J_1$ CRITICAL
- $\varepsilon_{vm}$ CRITICAL

96

**ACCELERATED-LIFE MATERIALS DATABASE
(SIFT-ATM)**

CONTAINS MATERIAL PROPERTIES CURVES
REFLECTING THE IMPACT OF:
- TIME
- HUMIDITY
- TEMPERATURE (CYCLIC/STATIC)
- LOAD FREQUENCY

88

- FIBER AND MATRIX MODULUS
  VS. STAIN (LINEAR & TORSIONAL)
- FIBER/MATRIX CTE ($\alpha$)
- FIBER/MATRIX POISSON'S RATIOS
- FIBER/PLY THICKNESS
- STAIN-FREE TEMPERATURE
- $J_1$ CRITICAL
- $\varepsilon_{vm}$ CRITICAL

98

MODIFICATION FACTORS FOR ($J_1$ CRITICAL,
$\varepsilon_{vm}$ CRITICAL), POISSON'S RATIOS, CTE
TO ACCOUNT FOR
- TEMPERATURE
- LOAD FREQUENCY
- TIME
- HUMIDITY

90

**CRITICAL VALUES CALCULATOR**

CALCULATES CRITICAL STRAIN INVARIANTS
($J_1$ CRITICAL, $\varepsilon_{vm}$ CRITICAL) FROM TEST DATA

100

**MASTER CURVE GENERATOR (SIFT-ATM)**

CALCULATES MATERIALS MASTER
CURVES BASED ON TEST DATA

92

- FIBER & RESIN NAME
- FIBER VOLUME
- STAIN-FREE TEMPERATURE
- FAILURE LOAD
- INCREMENTAL LOAD VS. STRAIN
- FAILURE STRAIN FOR THREE TEST
  SPECIMENS W/FIBERS ORIENTED 0",
10-20" AND 90" (MAY BE MULTIPLE TESTS
@ EACH ORIENTATION

102

TEST DATA

94

**SIFT MATERIALS TESTS**
PROVIDE DATA NEEDED TO CALCULATE SIFT
CRITICAL MATERIALS PROPERTIES

104

**SIFT-ATM ACCELERATED-LIFE MATERIALS
TESTS**

PROVIDES DATA NEEDED TO CALCULATE
MATERIALS MASTER CURVES

*FIG. 4B*

FROM FIG 4 | FROM P-OR H-ELEMENT CODE

*FOR VISUALIZATION*

**116**

**HOMOGENIZED ANALYSIS DATA**

*CONTAINS SAME AS INITIAL ANALYSIS FILE, PLUS COMPLETE SET OF STRAIN TENSORS (MECHANICAL AND THERMAL) FOR ALL NODES/GAUSS POINTS
•FILE FOR EVERY PLY

**118**

**MICRO-MECHANICAL "ENHANCER" ANALYTICAL PACKAGE**

PROVIDES 2 ANALYTICAL CAPABILITIES
•GENERATES ENHANCED SET OF STRAIN TENSORS THAT REFLECTS MICROMECHANICAL BEHAVIOR OF FIBER AND MATRIX UNDER THE USER-DEFINED THERMAL BOUNDARY CONDITIONS.
•GENERATES ENHANCED SET OF STRAIN TENSORS THAT REFLECT MICROMECHANICAL BEHAVIOR OF FIBER AND MATRIX UNDER THE MECHANICAL CONDITIONS NECESSARY TO INITIATE FAILURE OF THE FIBER OR MATRIX. REPORTS BOTH THE CONDITIONS NECESSARY FOR FAILURE AND THE LOCATION OF FIRST FAILURE (FAILURE IS DEFINED AS $J_1 \geq J_1^{CRITICAL}$ OR $\varepsilon_{vm} \geq \varepsilon_{vm}$ CRITICAL), ASSUMING LINEAR-ELASTIC BEHAVIOR.

*FOR VISUALIZATION*

**120**

**ENHANCED ANALYSIS DATA**

•CONTAINS SAME AS HOMOGENIZED ANALYSIS FILE, EXCEPT STRAIN TENSORS (MECHANICAL AND THERMAL) ENHANCED TO REFLECT MICRO-MECHANICAL BEHAVIOR OF FIBER AND MATRIX
•STRAIN TENSORS PROVIDED ARE FOR THE CONDITIONS DETERMINED TO CORRESPOND TO FAILURE INITIATION.

**124**

**MAXIMUM ENERGY RETENTION ANALYSIS MODULE (SIFT-MER)**

•RAPID ANALYSIS TOOL FOR IN-PLANE LOADING CONDITIONS
•DETERMINES THE LOAD ENVIRONMENT THAT RESULTS IN DAMAGE INSTABILITY
•DETERMINES THE MOST LIKELY DIRECTION OF THE DAMAGE INSTABILITY

**124** — RESULTS DATA → TO USER OR H/P-ELEMENT CODE FOR VISUALIZATION

**126**

**PROBABILISTIC MODULE**
•IDENTIFIES LIKELY IMPACT OF MANUFACTURING/INSTALLATION/MATERIALS VARIATION ON MER OR EFM RESULTS
•MODIFIES ANALYSIS FILES TO INCORPORATE LIKELY VARIATION AND ACCUMULATES THE MER/EFM RESULTS FROM EACH MODIFICATION
•USES STATISTICAL ANALYSIS TO DETERMINE MOST LIKELY LOAD CONDITIONS FOR FAILURE INITIATION (FROM ENHANCER MODULE), DAMAGE INSTABILITY (FROM MER MODULE), AND/OR DAMAGE PROPAGATION (FROM EFM MODULE), AS WELL AS LIKELY DIRECTION (PATH) OF DAMAGE INSTABILITY OR PROPAGATION WHEN LIKELY VARIATIONS ARE INCORPORATED IN THE MODEL.

TO ANALYSIS FILES

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAY et al.** Element Failure: An Alternative to Material Property Degradation Method for Progressive Damage in Composite Structures. *Journal of Composite Materials,* 14 June 2005, 1659-1675
- Damage progression by the element-failure method (EFM) and strain invariant failure theory (SIFT). **TAY T E et al.** COMPOSITES SCIENCE AND TECHNOLOGY. ELSEVIER, May 2005, vol. 65, 935-944
- **BARLOW J.** Optimal stress locations in finite element models. *INTERNATIONAL JOURNAL FOR NUMERICAL METHODS IN ENGINEERING,* 1976, vol. 10 (2), 243-251
- **BARLOW JOHN.** More on optimal stress points - reduced integration, element distortions and error estimation. *INT J NUMBER METHODS ENG JUL 1989,* July 1989, vol. 28 (7), 1487-1504
- A Damage Functional Methodology for Assessing Post-Damage Initiation Environments in Composite Structure. **JONATHAN H. GOSSE.** 45th AIAA/ASME/ASC Structures, Structural Dynamics & Materials Conference. Palm Springs, 19 April 2004

- **JON GOSSE.** Strain Invariant Failure Theory. *Failure Theory and Methodologies for Implementation, http://www.compositn.net/Downloads/Presentation%20-%20Modelling%20-%20Boeing.pdf*
- **T.E. TAY ; S.H.N. TAN ; V.B.C. TAN ; J.H. GOSSE.** Damage progression by the element-failure method (EFM) and strain invariant failure theory (SIFT). *Composites Science and Technology,* December 2004, vol. 65, 935-944
- **R. LI ; D. KELLY ; R. NESS.** Application of a First Invariant Strain Criterion for Matrix Failure in Composite Materials. *Journal of Composite Materials,* November 2003, vol. 37 (22), 1977-2000
- **STEPHEN W. TSAI ; JOHN L. TOWNSLEY.** Methodology for Composite Durability Assessment. *SAMPE Technical Conference,* September 2003